# EUROPÄISCHE PATENTSCHRIFT

(11) **EP 1 654 091 B1**
(45) Veröffentlichungstag und Bekanntmachung des Hinweises auf die Patenterteilung: **19.01.2011**
(21) Anmeldenummer: 04740620.2
(22) Anmeldetag: 03.07.2004
(51) Int. Cl.: B23Q 11/00, B23Q 16/00, B23Q 3/155, B23B 31/00

(54) **WERKZEUGKUPPLUNG**
TOOL COUPLING
DISPOSITIF D'ACCOUPLEMENT D'OUTIL

(30) Priorität: 11.08.2003 DE 10336869
(43) Veröffentlichungstag der Anmeldung: 10.05.2006
(73) Patentinhaber: KENNAMETAL INC., Latrobe, PA 15650-0231 (US)
(72) Erfinder: STORCH, Helmut, 91541 Rothenburg o.T. (DE); ERICKSON, Robert, A., Raleigh, NC 27609 (US)
(74) Vertreter: Vomberg, Friedhelm
(86) Internationale Anmeldenummer: PCT/EP2004/007279
(87) Internationale Veröffentlichungsnummer: WO 2005/018871

(56) Entgegenhaltungen:
- EP-A- 1 339 014
- WO-A-88/05360
- DE-A- 3 326 615
- DE-A- 3 807 140
- DE-A- 3 916 315
- FOSHAG S: "KONTINUIERLICHE ENTWICKLUNG BEI DEN WERKZEUGEN" WERKSTATT UND BETRIEB, CARL HANSER VERLAG. MUNCHEN, DE, Bd. 124, Nr. 9, 1. September 1991 (1991-09-01), Seiten 720-724, XP000241534 ISSN: 0043-2792

## Beschreibung

Die Erfindung betrifft eine Werkzeugkupplung zur Verbindung eines wechselbaren Werkzeugkopfes mit einer Werkzeugmaschine mit einem zumindest teilweise oder vollständig kegelig oder zylindrisch ausgebildeten Hohlschaft und einem ringförmigen Anlagebund, die mit einer entsprechend ausgebildeten Aufnahmebohrung und einer ringförmigen Gegenfläche eines Grundhalters an einer Werkzeugmaschine zusammenwirken, wobei der Grundhalter und die Werkzeugkupplung mittels Spannelementen, die über eine Spannvorrichtung betätigbar sind, so verriegelbar sind, dass der Anlagebund der Werkzeugkupplung an der Gegenfläche des Grundhalters anliegt, und mit einer an der Werkzeugkupplung vorgesehenen umlaufenden Greifernut für eine Greifeinrichtung beim automatischen Werkzeugwechsel.

Kupplungen dieser Art sind beispielsweise aus der EP 0 343 190 B1 bekannt, wobei letztgenannte Kupplung mit Kugeln als Spannelementen arbeitet, die über eine Spannstange in vorhandene Durchbrechungen radial auswärts beim Spannen des Werkzeuges und radial einwärts beim Lösen des Werkzeuges getrieben werden. Eine andere vergleichbare Werkzeugkupplung mit keilförmigen Spannelementen zeigt und beschreibt die DE 38 07 140 C2. Durch die Kombination eines Hohlkegelschaftes, der gegenüber der entsprechenden Aufnahmebohrung ein geringes Übermaß im Bereich der elastischen Verformbarkeit aufweist, kann in Verbindung mit der gegenseitigen Plananlage eine hohe axiale Versteifung bei statischer und dynamischer Belastung geschaffen werden, welche die Werkzeugkupplung als Verbindung zwischen einem Werkzeughalter und einem Grundhalter, gegebenenfalls in Form einer Werkzeugmaschinenspindelaufnahme, schafft, die auf Werkzeugmaschinen zum Drehen, Bohren und Fräsen einsetzbar ist. Hierdurch kann eine Werkzeugmaschine als ein Bearbeitungszentrum verwendet werden, mit dem vielerlei Zerspanungsoperationen durchführbar sind. Im Rahmen einer vollautomatisierten Fertigung gewinnen sogenannte Werkzeugwechselsysteme zunehmend an Bedeutung, wobei an Stelle eines manuellen Werkzeugwechsels zum Wechseln des Werkzeugkopfes an diesem bzw. an der Werkzeugkupplung eine Greifernut vorgesehen ist.

Um jedoch einen Werkzeugkopf mit der Werkzeugkupplung, die auch als separates Zwischenstück zur Aufnahme und Befestigung eines Werkzeugkopfes ausgebildet sein kann, in einer Werkzeugmaschinenspindel oder einem Grundhalter einerseits sowie in einem Werkzeugmagazin, z. B. einer Revolverscheibe, andererseits hinsichtlich der Drehwinkeleinstellung exakt ausrichten zu können, sind weitere Positionierelemente erforderlich. Hierzu werden nach dem Stand der Technik entweder am Außenmantel der Werkzeugkupplung angeordnete Anschläge oder sonstige Schaltund Ausrichtflächen in Verbindung mit Positionierelementen wie Stiften im Grundhalter oder einer Maschinenspindel verwendet. Zur Orientierung der Werkzeugkupplung im Magazin einerseits sowie in der Werkzeugkupplungsaufnahme andererseits und zur Vermeidung einer 180°-Fehlstellung, sind solche Schalt- und Ausrichtflächen an diametral gegenüberliegenden Mantelflächen der Werkzeugkupplung vorgesehen.

Hierzu dienen bei dem Werkzeugträger nach EP 1 007 256 B1 diametral gegenüberliegende Ausnehmungen, die jedoch aus vorgenannten Gründen geometrisch unterschiedlich ausgestaltet werden müssen. Die sich aus dieser Ausgestaltung ergebende Unwucht macht sich insbesondere bei hohen Drehzahlen rotierend bewegter Werkzeuge bemerkbar. Um diese Unwuchtquelle sowie weitere sich aus asymmetrischen Werkzeugkupplungsgestaltungen ergebende Unwuchten zu kompensieren, wird bei dem Werkzeugträger gemäß EP 1 007 256 B1 vorgeschlagen, eine oder mehrere Bohrungen in dem Innenraum des Werkzeugträgers vorzusehen. Der Werkzeugträger nach EP 1 007 256 B1 ist jedoch nachteiliger Weise nur auf einen bestimmten Werkzeugmaschinentyp abgestimmt.

Es ist Aufgabe der vorliegenden Erfindung, die eingangs genannte Werkzeugkupplung dahingehend zu verbessern, dass eine alternative Lösung geschaffen wird, die universell bei mehreren Maschinentypen einsetzbar ist und eine höchst mögliche Drehwinkelpositionierungsgenauigkeit bei größtmöglichem Gewichtsausgleich zur Vermeidung einer Unwucht gestattet.

Diese Aufgabe wird durch die Werkzeugkupplung nach Anspruch 1 gelöst. Erfindungsgemäß ist vorgesehen, dass in der Greiferrille zwei diametral entgegengesetzt erste angeordnete Sacklochbohnrngen mit unterschiedlichen Bohrlochkonturen angeordnet sind. Gegenüber den nach dem Stand der Technik bekannten Lösungen ist durch die diametral entgegengesetzte Anordnung der Bohrungen in der Nut bereits weitgehend einer Unwucht entgegengewirkt. Zusätzliche Bohrungen zum Unwuchtausgleich, durch die der Körper der Werkzeugkupplung anderen Orts geschwächt wird, sind nicht erforderlich, wobei vorteilhafter Weise die Fertigung solcher Werkzeugkupplungen vereinfacht ist. Durch die vorzugsweise gewählte kegelige Hohlschaftausführung in Verbindung mit der Plananlage sowie den zum Spannen der Werkzeugkupplung radial auswärts bewegbaren Spannelemente, insbesondere Spannkugeln, die bei einer Werkzeugrotation Fliegkräften unterliegen, wird bereits eine nicht nur statische, sondern auch eine dynamische Steifigkeit erreicht, die eine Unwucht bis in hohe Drehzahlen vermeidet. Die unterschiedlichen Bohrlochkonturen der diametral gegenüberliegenden Sacklochbohrungen lassen sich zudem so fertigen, dass sich statisch wie dynamisch (bei Rotationen) die durch die Ausnehmungen "fortgenommenen Massen" vollständig, zumindest aber im Wesentlichen, kompensieren.

Die Sacklochbohrungen haben zudem den Vorteil, dass sie in Verbindung mit Positionierstiften eine axial wie auch hinsichtlich des Drehwinkels exakte Ausrichtung der Werkzeugkupplung ermöglichen, so dass Werkzeugfehlstellungen praktisch ausgeschlossen sind.

Im Rahmen eines automatisierten Werkzeugwechsels ist es zudem wünschenswert, wenn das betreffende Werkzeug bzw. der Werkzeugkopf automatisch identifizierbar ist. Zur Werkzeugidentifizierung sind nach dem Stand der Technik lesbare Mikrochips bekannt, die an oder in der Werkzeugkupplung integriert sind. Eine bestmögliche Lesbarkeit ist dann gewährleistet, wenn die Microchips am Außenmantel des betreffenden Trägerkörpers angeordnet sind. Verwendet man nach der Erfindung eine Werkzeugkupptung mit zusätzlichen zwei weiteren diametral gegenüberliegenden zweiten Sacklochbohrungen, die um 90° zu den bereits beschriebenen ersten Sacklochbohrungen (mit unterschiedlichen Bohrlochkonturen) versetzt angeordnet sind, kann in einer dieser Bohrungen der Mikrochip befestigt werden. Durch die hiermit gegebene radiale Versetzung des Mikrochips nach innen wird der Mikrochips gegen mechanische äußere Einwirkungen hinreichend geschützt. Diese zusätzlichen weiteren diametral gegenüberliegenden Bohrungen haben eine identische bzw. im Wesentlichen identische Bohrlochkontur. Während eine der zusätzlichen Bohrungen zur Aufnahme des Mikrochips dient, wird mit der gegenüberliegenden Bohrung die statische dynamische Unwucht beseitigt. Vorzugsweise sind diese beiden Bohrungen flach ausgebildet, d. h. dass sie einen größeren Durchmesser als das Maß ihrer Tiefe besitzen. Der Durchmesser der Bohrungen kann genauso groß gewählt werden wie der Durchmesser der oberen Bereiche der beiden Sacklochbohrungen mit unterschiedlicher Bohriochkontur.

Weiterentwicklungen der Erfindung sind in den Unteransprüchen beschrieben. So sind die Sacklochbohrungen vorzugsweise mittig zur Greifernut angeordnet, wobei sie weiterhin vorzugsweise einen größeren Durchmesser - zumindest im oberen Bereich - haben, als die Nutbreite.

Nach einer weiteren Ausführungsform der Erfindung können die ersten Sacklochbohrungen im Querschnitt einen oberen, im Durchmesser breiteren Bereich und einen sich zum Bohrlochgrund anschließenden weiteren Bereich mit einem kleineren Durchmesser besitzen. Vorzugsweise sind die Durchmesser im oberen Bereich gleich groß gewählt. Der untere Bereich der stufenförmig ausgebildeten ersten Sacklochbohrung besitzt auf gegenüberliegenden Seiten einheitlich einen kleineren, aber gegebenenfalls unterschiedlichen Durchmesser. So kann eine der ersten Sacklochbohrungen im unteren Bereich einen kleineren Durchmesser, aber eine größere Tiefe und umgekehrt auf der anderen Seite einen vergleichsweise größeren Durchmesser, aber eine geringere Tiefe aufweisen. Die geometrisch unterschiedliche Ausgestaltung lässt sich auch durch einen teilweise konischen Bohrlochgrund oder einen ebenen Bohnochgrund realisieren. Hierdurch sind 180°-Drehwinkelvertauschungen bei der erfindungsgemäßen Werkzeugkupplung wirksam ausgeschlossen..

Jede der zusätzlichen zweiten Bohrungen kann jedoch bei Bedarf in derselben Weise wie zuvor bei den ersten Sacklochbohrungen beschrieben verwendet werden.

Nach einer weiteren Ausgestaltung ist die Gesamtheit der vier vorhandenen Sacklochbohrungen in Form von zwei jeweils gegenüberliegenden Bohrlochpaaren so ausgebildet, dass die Werkzeugkupplung vollständig ausgewuchtet ist.

Die Werkzeugkupplungen können je nach Anwendungszweck eine unterschiedliche Größe aufweisen, die der Größe der verwendeten Spindeln oder sonstiger Adapter und Zwischenstücke angepasst ist. Die üblichen Systemgrößen liegen bei 32 mm bis 160 mm, vorzugsweise zwischen 40 mm und 100 mm. Übliche Durchmessermaße liegen bei 40 mm bis 80 mm. Je nach Durchmesser dieser Werkzeugkupplungen werden im Durchmesser größere oder kleinere Sacklochbohrungen verwendet, wobei vorzugsweise die Durchmessermaße zwischen 10 mm und 20 mm, insbesondere zwischen 10 mm und 16 mm differieren.

Nach einer weiteren Ausgestaltung der Erfindung sind bezogen auf eine Stirnansicht der Werkzeugkupplung die ersten Sacklochbohrungen mit unterschiedlichen Bohrlochkonturen in einer senkrechten Ebene zu der Verbindungslinie von Durchbrechungen des Hohlschaftes zur Verriegelung der Spannelemente angeordnet. Dem entsprechend liegen die zusätzlichen zweiten Sacklochbohrungen, von denen eine den Mikrochip trägt, hierzu um 90° versetzt.

Ein Ausführungsbeispiel der Erfindung ist in den Zeichnungen dargestellt. Es zeigen:
- Fig. 1: eine perspektivische Ansicht einer erfindungsgemäßen Werkzeugkupp- lung,
- Fig. 2 und 3: jeweils um 90° versetzte Seitenansichten dieser Werkzeugkupplung,
- Fig. 4: eine Schnittansicht dieser Werkzeugkupplung im Bereich der Sackloch- bohrungen und
- Fig. 5 bis 7: jeweilige Sacklochbohrungs-Querschnitte.

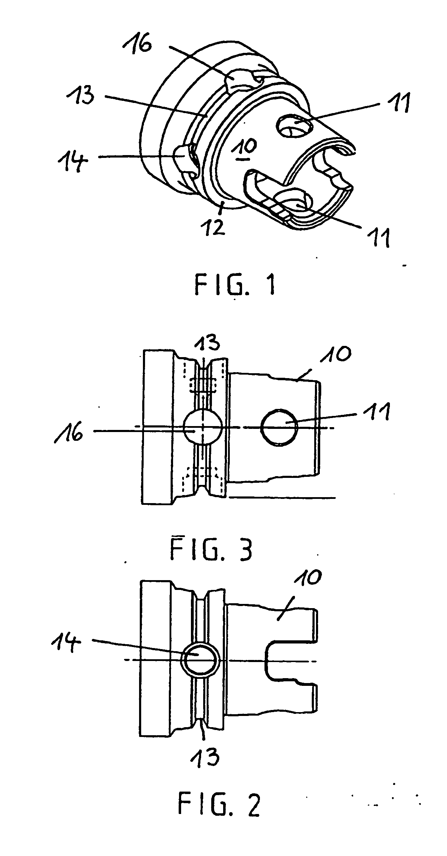

Die in Fig. 1 dargestellte Werkzeugkupplung besitzt einen Hohlschaft 10 mit einer kegeligen Außenmantelfläche, die gegenüberliegende Durchbrechungen 11 aufweist, mittels derer in Verbindung mit nicht dargestellten kugelförmigen Spannelementen die Werkzeugkupplung in einer Maschinenspindel fixiert werden kann. Ferner besitzt die Werkzeugkupplung einen ringförmigen Anlagebund 12, der mit einer entsprechend ausgebildeten ringförmigen Gegenfläche eines Grundhalters an der Werkzeugmaschine zusammenwirkt. Werkzeugkupplungen dieser Art sind beispielsweise in der EP 0 343 190 B1 im Einzelnen beschrieben. Zudem besitzt die Werkzeugkupplung eine im Wesentlichen V-förmige umlaufende Greifernut 13, in die eine nicht dargestellte Greifereinrichtung beim Werkzeugwechsel eingreifen kann. An dem dem Hohlschaft 10 entgegengesetzten Ende ist der eigentliche Werkzeugkopf als Werkzeugträger (nicht dargestellt) befestigt.

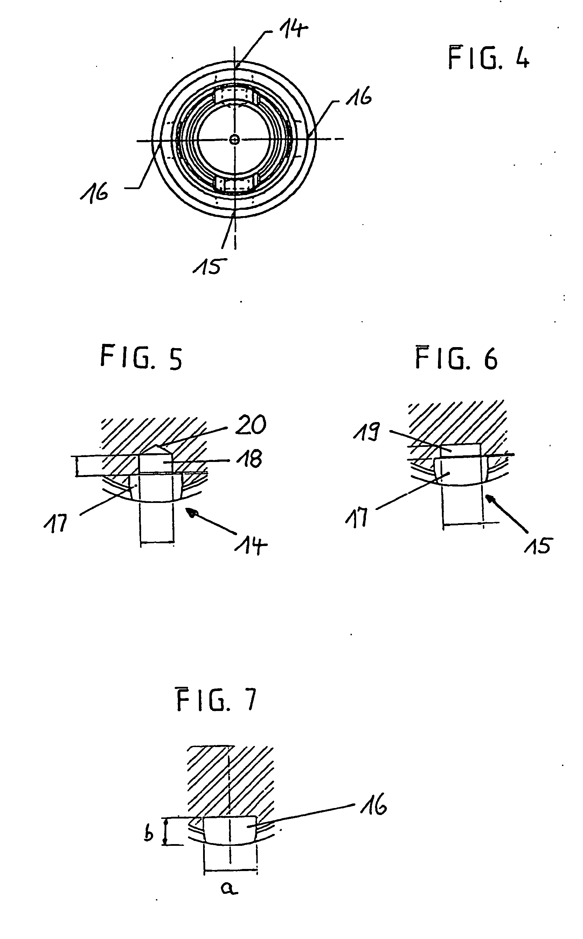

Erfindungsgemäß besitzt die Werkzeugkupplung zwei erste diametral gegenüberliegende Sacklochbohrungen 14 und 15, deren unterschiedliche Querschnitte in Fig. 5 und 6 dargestellt sind. Diese Bohrungen bzw. deren Verbindungslinie liegt senkrecht zu der Verbindungslinie der beiden vorbeschriebenen Durchbrechungen 11 im Hohlschaft 10. Jeweils in der Bohrkontur gleichartig ausgebildete flache Bohrungen 16 liegen um 90° versetzt und diametral gegenüberliegend, wobei deren Verbindungslinie parallel zur Verbindungslinie der beiden Durchbrechungen 11 angeordnet ist. Die in Fig. 1 sichtbare Bohrung 16 dient hierbei als Ausgleichsbohrung zur Beseitigung der Unwucht, die bei alleiniger Anordnung der gegenüberliegenden Bohrung 16, in der ein Mikrochip angeordnet ist, entstehen würde. Dieser Mikrochip enthält einen Datenspeicher, in dem die Identifikationscodes für das betreffende Werkzeug enthalten sind. Die Bohrungen 14, 15 und 16 sind mittig zu der Greifernut angeordnet, wie dies aus Fig. 2 und 3 deutlich wird. Hierbei hat die Bohrung 16 einen im Wesentlichen einheitlichen Durchmesser a von 10mm bei einer geringeren Bohrlochtiefe b von 5,4mm. Wie in Fig. 7 ersichtlich, kann jedoch die Bohrung leicht von einer Zylinderform abweichen und zum offenen Ende hin konisch verjüngt ausgebildet sein. In einer der Bohrungen 16 ist ein Mikrochip angeordnet, der einen Speicher mit lesbaren Informationen zur Werkzeugidentifikation enthält. Durch diese Anordnung des Mikrochips in der Bohrung 16 ist dieser Mikrochip gegen äußere mechanische Beschädigungen geschützt.

Die Bohrungen 14 und 15 besitzen hingegen eine unterschiedliche Bohrlochkontur, wobei in einem besonderen Ausführungsbeispiel der obere Bereich 17 dieser Bohrungen 14 und 15 eine gleiche Kontur aufweist, wie die Bohrung 16. Hieran schließt sich ein unterer Bereich 18 bzw. 19 an, wobei die in Fig. 5 dargestellte Bohrung 14 einen unteren Bereich 18 mit einem zylindrischen Bereich aufweist, an den sich ein konisch ausgebildeter Bohrlochgrund 20 anschließt. Diese Bohrung 14 wird zur kontrollierten Positionierung der Werkzeugkupplung in der maschinenseitigen Aufnahme (Spindel oder Grundhalter) verwendet, in der beispielsweise über federbelastete Stifte mit einem konischen Abschluss im Grundhalter feststellbar ist, wenn die Werkzeugkupplung und damit der Werkzeugkopf die gewünschte Drehwinkeleinstellung erreicht hat. Die gegenüberliegende Bohrung 15 besitzt stattdessen einen unteren zylindrisch ausgebildeten Bereich 19 mit einem kleineren Durchmesser als der obere Bereich 17, jedoch ist diese Bohrung erheblich flacher, d. h. mit einer geringeren Bohrlochtiefe ausgebildet. Die Bohrung 15 dient in Verbindung mit entsprechenden Positionierstiften zur Orientierung der Werkzeugkupplung in einem Magazin.

## Patentansprüche

1. Werkzeugkupplung zur Verbindung eines wechselbaren Werkzeugkopfes mit einer Werkzeugmaschine, mit einem zumindest teilweise oder vollständig kegelig oder zylindrisch ausgebildeten Hohlschaft (10) und einem ringförmigen Anlagebund (12), die mit einer entsprechend ausgebildeten Aufnahmebohrung und einer ringförmigen Gegenfläche eines Grundhalters an der Werkzeugmaschine zusammenwirken können, wobei der Grundhalter und die Werkzeugkupplung mittels Spannelementen, die über eine Spannvorrichtung betätigbar sind, so verriegelbar sind, dass der Anlagebund (12) der Werkzeugkupplung an der Gegenfläche des Grundhalters anliegt, und mit einer an der Werkzeugkupplung vorgesehenen umlaufenden Greifernut (13) für eine Greifeinrichtung beim automatisierten Werkzeugwechsel,
**dadurch gekennzeichnet, dass**
in der Greifernut (13) zwei diametral entgegengesetzt angeordnete erste Sacklochbohrungen (14, 15) mit unterschiedlichen Bohrlochkonturen angeordnet sind und dass zusätzlich zwei weitere diametral gegenüberliegende zweite Sacklochbohrungen (16) vorgesehen sind, die um 90° zu den ersten Sacklochbohrung (14, 15) mit unterschiedlichen Bohrlochkonturen versetzt angeordnet sind, wobei in einer der weiteren zweiten Sacklochbohrungen ein Mikrochip mit einem lesbaren Speicher angeordnet ist, dessen Informationen zur Werkzeugidentifikation oder -codierung dienen.

2. Werkzeugkupplung nach Anspruch 1, **dadurch gekennzeichnet, dass** die Sacklochbohrungen (14, 15, 16) mittig zur Greifernut (13) angeordnet sind und/oder einen größten Durchmesser haben, der größer als die Nutbreite ist.

3. Werkzeugkupplung nach Anspruch 1 oder 2, **dadurch gekennzeichnet, dass** die ersten Sacklochbohrungen im Querschnitt einen oberen im Durchmes-ser breiten Bereich (17) und einen sich zum Bohrlochgrund anschließenden unteren Bereich (18, 19) mit einem kleineren Durchmesser aufweisen.

4. Werkzeugkupplung nach Anspruch 3, **dadurch gekennzeichnet, dass** der Bohrlochgrund einer der ersten Sacklochbohrungen eben und der anderen Sacklochbohrung zumindest teilweise konisch ausgebildet ist.

5. Werkzeugkupplung nach Anspruch 1, **dadurch gekennzeichnet, dass** die weiteren zweiten Sacklochbohrungen (16) einen größeren Durchmesser (a) als ihre Tiefe (b) besitzen.

6. Werkzeugkupplung nach einem der Ansprüche 1 bis 5, **dadurch gekennzeichnet, dass** die Sacklochbohrungen (14, 15 und 16) so ausgefertigt sind, dass die Werkzeugkupplung statisch und dynamisch ausgewuchtet ist.

7. Werkzeugkupplung nach einem der Ansprüche 1 bis 6, **dadurch gekennzeichnet, dass** - zumindest im oberen Bereich - die Durchmesser der ersten Sacklochbohrungen (14, 15) und/oder der weiteren zweiten Sacklochbohrungen (16) zwischen 10mm und 20mm liegen, vorzugsweise zwischen 10mm und 16mm.

8. Werkzeugkupplung nach einem der Ansprüche 1 bis 7, **dadurch** gekenn-zeichnet, dass bezogen auf eine Stirnansicht die ersten Sacklochbohrungen (14, 15) mit unterschiedlichen Bohrlochkonturen in einer senkrechten Ebene zur der Verbindungslinie von Durchbrechungen (11) des Hohlschaftes (10) zur Verriegelung der Spannelemente liegen.

## Claims

1. Tool coupler for connecting an exchangeable tool head to a machine tool, with an at least partly or fully conical or cylindrical hollow shaft (10) and an annular collar (12) which can interact with correspondingly configured receiving bore hole and an annular opposite surface of a basic holder on the machine tool, where the basic holder and the tool coupler can be locked by means of clamping elements which can be actuated via a clamping device such that the collar (12) of the tool coupler abuts on the opposite surface of the basic holder, and with a continuous gripper groove (13) in the tool coupler for a gripping device used in automatic tool replacement, **characterized in that** two first diametrically opposite blind holes (14, 15) with different bore hole contours are arranged in the gripper groove (13) and that additionally two more diametrically opposite second blind bore holes (16) are provided, which are disposed to be offset by 90° from the first blind hole (14, 15) with different bore hole contours, where in one of the two more second blind bore holes a microchip with a readable memory is arranged whose information serve for tool-identification or -coding.

2. Tool coupler according to claim 1, **characterized in that** the blind bore holes (14, 15, 16) are arranged centrically relative to the gripper groove (13) and/or have a maximum diameter that is greater than the width of the groove.

3. Tool coupler according to claim 1 or 2, **characterized in that** the cross sections of first blind bore holes have a top area (17) wider in diameter and a bottom area (18, 19) with a smaller diameter joining to the bore hole bottom.

4. Tool coupler according to claim 3, **characterized in that** the bore hole bottom of one of the first blind bore holes is plane and of the other blind bore hole is shaped at least partially conically.

5. Tool coupler according to claim 1, **characterized in that** the further second blind bore holes (16) have a greater diameter (a) than its depth (b).

6. Tool coupler according to one of the claims 1 to 5, **characterized in that** the blind bore holes (14, 15 and 16) are made such that the tool coupler is statically and dynamically balanced.

7. Tool coupler according to one of the claims 1 to 6, **characterized in that** - at least in the upper area - the diameter of the first blind bore holes (14, 15) and/or of the further second blind bore holes (16) lie between 10 mm and 20 mm, preferably between 10 mm and 16 mm.

8. Tool coupler according to one of the claims 1 to 7, **characterized in that**, referred to a front view, the first blind bore holes (14, 15) with different bore hole contours lie in a vertical plane to the connecting line of the openings (11) of the hollow shaft (10) for locking the clamping elements.

## Revendications

1. Dispositif d'accouplement d'outil pour relier une tête d'outil échangeable à une machine-outil, avec une tige creuse (10) qui est au moins en partie ou complètement conique ou cylindrique et avec un collet d'appui annulaire (12) qui peuvent agir de concert avec un trou de réception réalisé de manière correspondante et avec une contre-surface annulaire d'un support de base sur ladite machine-outil, ledit support de base et ledit dispositif d'accouplement d'outil pouvant être verrouillés par l'intermédiaire d'éléments de serrage aptes à être manoeuvrés par un dispositif de serrage, de telle sorte que ledit collet d'appui (12) du dispositif d'accouplement d'outil s'appuie sur ladite contre-surface du support de base, et avec une rainure périphérique de préhension (13), prévue sur ledit dispositif d'accouplement d'outil, pour un dispositif de préhension lors de l'échange d'outil automatisé, **caractérisé par le fait que** deux premiers trous borgnes (14, 15) diamétralement opposés et ayant des contours de trou différents sont disposés dans ladite rainure de préhension (13) et que, en sus, deux autres deuxièmes trous borgnes (16) diamétralement opposés sont prévus qui sont disposés de manière à être décalés de 90° par rapport aux premiers trous borgnes (14, 15) à contours de trou différents, dans l'un des autres deuxièmes trous borgnes étant disposée une puce ayant une mémoire lisible dont les informations servent à l'identification d'outil ou au codage d'outil.

2. Dispositif d'accouplement d'outil selon la revendication 1, **caractérisé par le fait que** lesdits trous borgnes (14, 15, 16) sont disposés de manière centrale par rapport à ladite rainure de préhension (13) et/ou présentent un diamètre maximal qui est supérieur à la largeur de la rainure.

3. Dispositif d'accouplement d'outil selon la revendication 1 ou 2, **caractérisé par le fait que** lesdits premiers trous borgnes présentent, en coupe transversale, une zone supérieure (17) large en diamètre ainsi qu'une zone inférieure (18, 19) qui suit en direction du fond du trou et qui présente un diamètre plus petit.

4. Dispositif d'accouplement d'outil selon la revendication 3, **caractérisé par le fait que** le fond de trou de l'un des premiers trous borgnes est plan et celui de l'autre trou borgne est au moins en partie conique.

5. Dispositif d'accouplement d'outil selon la revendication 1, **caractérisé par le fait que** les autres deuxièmes trous borgnes (16) présentent un diamètre (a) qui est supérieur à leur profondeur (b).

6. Dispositif d'accouplement d'outil selon l'une quelconque des revendications 1 à 5, **caractérisé par le fait que** les trous borgnes (14, 15 et 16) sont réalisés de manière à ce que le dispositif d'accouplement d'outil soit équilibré statiquement et dynamiquement.

7. Dispositif d'accouplement d'outil selon l'une quelconque des revendications 1 à 6, **caractérisé par le fait que** - au moins dans la zone supérieure - les diamètres des premiers trous borgnes (14, 15) et/ou des autres deuxièmes trous borgnes (16) sont compris entre 10 mm et 20 mm, de préférence entre 10 mm et 16 mm.

8. Dispositif d'accouplement d'outil selon l'une quelconque des revendications 1 à 7, **caractérisé par le fait que**, référé à une vue de face, lesdits premiers trous borgnes (14, 15) ayant des contours de trou différents sont situés dans un plan perpendiculaire à la ligne de jonction de percées (11) de ladite tige creuse (10) pour le verrouillage desdits éléments de serrage.
